# EUROPEAN PATENT APPLICATION

(11) **EP 3 511 385 A1**
(43) Date of publication of application: **17.07.2019**
(21) Application number: 17848536.3
(22) Date of filing: 16.08.2017
(51) Int. Cl.: C09J 7/00, B32B 27/00, B32B 27/40, C08G 18/10, C08G 18/62, C08G 18/73, C08G 18/75, C09J 175/04, G02F 1/1333, G06F 3/041

(54) **OPTICALLY CLEAR ADHESIVE SHEET, METHOD FOR MANUFACTURING OPTICALLY CLEAR ADHESIVE SHEET, LAMINATE, DISPLAY DEVICE WITH TOUCH PANEL, AND METHOD FOR BONDING OPTICALLY CLEAR ADHESIVE SHEET**

(30) Priority: 06.09.2016 JP 2016174109; 16.11.2016 JP 2016223430
(71) Applicant: Bando Chemical Industries, Ltd., Kobe-shi, Hyogo 650-0047 (JP)
(72) Inventor: TAKAGI, Daisuke, Kobe-shi Hyogo 650-0047 (JP); HOSOKAWA, Yuki, Kobe-shi Hyogo 650-0047 (JP); OKUNO, Yuzo, Kobe-shi Hyogo 650-0047 (JP); MIYAKE, Masaya, Kobe-shi Hyogo 650-0047 (JP)
(74) Representative: Müller-Boré & Partner Patentanwälte PartG mbB
(86) International application number: PCT/JP2017/029447
(87) International publication number: WO 2018/047593

(57) **Abstract**

The present invention provides an optically clear adhesive sheet capable of reducing peeling after bonding due to causes such as outgassing and having excellent environment resistance, using a polyurethane that has excellent flexibility and is capable of giving a thick film. The optically clear adhesive sheet contains a polyurethane, the polyurethane being a cured product of a polyurethane composition containing a polyol component and a polyisocyanate component, the polyisocyanate component including a hydrophilic polyisocyanate, the optically clear adhesive sheet having a moisture content of 400 ppm or lower as measured by a Karl Fischer method.

## Description

### TECHNICAL FIELD

The present invention relates to optically clear adhesive sheets, methods for producing an optically clear adhesive sheet, laminates, display devices with a touchscreen, and methods for bonding an optically clear adhesive sheet.

### BACKGROUND ART

Optically clear adhesive (OCA) sheets are transparent adhesive sheets used to bond optical members to each other. A recent rapid increase in demand for touchscreens in the fields of smartphones, tablet PCs, handheld game consoles, and automotive navigation systems is accompanied by an increase in demand for OCA sheets used to bond a touchscreen to another optical member. A typical display device with a touchscreen has a stacking structure of optical members including a display panel (e.g., liquid crystal panel), a transparent member (touchscreen main unit) having on its outer surface a transparent conductive film formed of a material such as indium tin oxide (ITO), and a cover panel that protects the transparent conductive film, with OCA sheets used to bond these optical members to each other. In between the display panel and the touchscreen main unit, however, is arranged typically an air layer called an air gap with no OCA sheet because there is a gap larger than gaps between the other optical members due to the edge of a bezel, which is the housing of the display panel.

Known OCA sheets include those formed of a silicone-based resin composition or an acrylic resin composition, for example. OCA sheets containing a silicone-based resin, however, have a low adhesive strength and thus allow air to enter between the optical members. This may decrease, for example, the visibility of the display screen. In OCA sheets containing acrylic resin, acrylic acid remaining in the acrylic resin or acid components generated through hydrolysis may unfortunately corrode metals used in optical members. In addition, in the case where the acrylic resin composition is a UV-curing resin composition, free radicals in the acrylic resin, which are necessary in the curing reaction, may be consumed in the outer layer part under UV light, leaving the bottom part uncured. Thus, a thick OCA sheet may be difficult to obtain.

Patent Literature 1 discloses a technique to deal with these problems, which is to use, in formation of OCA sheets, a polyurethane resin-forming composition that contains a modified polyisocyanate and a polyol containing a liquid polycarbonate diol.

Patent Literature 2 discloses a urethane-based moisture-curable adhesive composition containing a specific urethane prepolymer, a specific olefin-based polyol, and specific tackifiers, with an aim of enhancing the adhesive strength of a moisture-curable adhesive to an olefin-based resin and to a polyester-based resin.

### CITATION LIST

### - Patent Literature

Patent Literature 1: JP 2013-136731 A
Patent Literature 2: JP 2012-21104 A

### SUMMARY OF INVENTION

### - Technical Problem

An air gap, which is an air layer, formed between optical members causes interfacial reflection because there are differences in refractive index between the air layer and the optical members. Such interfacial reflection lowers visibility of the display panel. This disadvantage has led to a demand for a thick OCA sheet suited to bonding of a display panel and a touchscreen main unit. Also, an OCA sheet used to bond a display panel and a touchscreen main unit is required to conform to an uneven surface on which the thick bezel is present. Accordingly, an OCA sheet has been desired which exhibits excellent flexibility (capability to conform to uneven surfaces) and can be made thick.

An important characteristic required for an OCA sheet is adhesive strength. The adhesive strength to glass is typically used as an evaluation index. An OCA sheet is also required to have physical properties that do not change even when the use environment changes.

In studies to solve these problems, the inventors have focused on solvent-free polyurethanes as a material having excellent flexibility and being capable of giving a thick film. The inventors thus made various studies on OCA sheets containing a polyurethane. The studies found that an OCA sheet is likely to have a problem of air bubbles at the interface with a glass plate when the OCA sheet is bonded to the glass plate and subjected to accelerated environmental testing in an environment such as a high-temperature, high-humidity environment (temperature: 85°C, humidity: 85%) or a high-temperature, normal-humidity environment (temperature: 95°C). The air bubbles are presumed to be caused mainly by a gas generated inside the OCA sheet. The outgassing is presumed to be caused by moisture and organic components, mainly moisture.

The inventors also found that in a high-temperature, high-humidity environment, OCA sheets are likely to turn white (opaque) due to moisture condensation inside the sheets. Especially in the case where the OCA sheet is made thick, the area of the sheet coming into contact with the high-humidity atmosphere increases and a change in the transparency is easily noticeable. This has led to a demand for even better moisture resistance.

The present invention has been made in view of the above current state of the art, and aims to provide an optically clear adhesive sheet capable of reducing peeling after bonding due to causes such as outgassing and having excellent environment resistance, using a polyurethane that has excellent flexibility and is capable of giving a thick film.

### - Solution to Problem

The inventors made studies on how to enhance the environment resistance of an optically clear adhesive sheet formed of a polyurethane composition. The studies found that with a hydrophilic polyisocyanate component, moisture condensation can be prevented, and thereby whitening can be sufficiently reduced. The studies, however, also found that a hydrophilic polyisocyanate component causes the moisture absorption to exceed the acceptable level during long-term storage in the rainy season or a high-humidity environment. For example, in a high-temperature, high-humidity environment possibly occurring during use of a device such as an automotive display, peeling was found to occur at the interface between the optically clear adhesive sheet and the touchscreen, for example, presumably due to gasification of moisture absorbed. The inventors then found that an optically clear adhesive sheet having a moisture content of 400 ppm or lower as measured by the Karl Fischer method can reduce such peeling after bonding due to causes such as outgassing and has excellent environment resistance, thereby completing the present invention.

One aspect of the present invention relates to an optically clear adhesive sheet containing a polyurethane, the polyurethane being a cured product of a polyurethane composition containing a polyol component and a polyisocyanate component, the polyisocyanate component including a hydrophilic polyisocyanate, the optically clear adhesive sheet having a moisture content of 400 ppm or lower as measured by a Karl Fischer method.

The hydrophilic polyisocyanate preferably has an ethylene oxide unit in a molecule.

The polyol component preferably has an olefin skeleton, and the polyisocyanate component is preferably a modified polyisocyanate obtainable by reacting an acyclic aliphatic and/or alicyclic polyisocyanate containing an isocyanate group with an ether compound having the ethylene oxide unit.

The polyurethane is preferably a thermosetting polyurethane.

Another aspect of the present invention relates to a method for producing the optically clear adhesive sheet according to the present invention, the method including: preparing the polyurethane composition by mixing the polyol component and the polyisocyanate component with stirring; and curing the polyurethane composition.

Yet another aspect of the present invention relates to a laminate including: the optically clear adhesive sheet of the present invention; a first release liner covering one surface of the optically clear adhesive sheet; and a second release liner covering the other surface of the optically clear adhesive sheet.

Yet another aspect of the present invention relates to a display device with a touchscreen, including: the optically clear adhesive sheet of the present invention; a display panel; and a touchscreen.

Yet another aspect of the present invention relates to a method for bonding an optically clear adhesive sheet, including bonding the optically clear adhesive sheet of the present invention to a substrate.

### - Advantageous Effects of Invention

The optically clear adhesive sheet of the present invention can reduce peeling after bonding due to causes such as outgassing and achieve excellent resistance against environments such as a high-temperature, high-humidity environment and a high-temperature, normal-humidity environment, while having the advantages of a polyurethane composition having excellent flexibility and capable of giving a thick film. Thus, the optically clear adhesive sheet of the present invention bonded to glass can sustain a stable interface with the glass. The optically clear adhesive sheet of the present invention is suitable for applications such as displays and tablet PCs.

The method for producing an optically clear adhesive sheet according to the present invention enables suitable production of the above optically clear adhesive sheet. The laminate of the present invention can improve the handleability of the optically clear adhesive sheet of the present invention. The display device with a touchscreen according to the present invention can improve the visibility of the display screen. The method for bonding an optically clear adhesive sheet according to the present invention can reduce peeling after bonding due to causes such as outgassing, and can give excellent resistance against environments such as high-temperature, high-humidity environments and high-temperature, normal-humidity environments to the resulting optically clear adhesive sheet.

### BRIEF DESCRIPTION OF DRAWINGS

Fig. 1 shows schematic views showing how air bubbles are generated around a fine foreign matter having entered between an optically clear adhesive sheet and a touchscreen.
Fig. 2 shows a schematic cross-sectional view of an exemplary display device with a touchscreen which includes the optically clear adhesive sheets of the present invention.
Fig. 3 shows a schematic view for describing an exemplary molding machine used in production of the optically clear adhesive sheet of the present invention.
Fig. 4 shows a schematic cross-sectional view of an optically clear adhesive sheet with release liners of Example 1.
Fig. 5 shows schematic views for describing the method for evaluating the adhesive strength of the optically clear adhesive sheets of an example.

### DESCRIPTION OF EMBODIMENTS

The optically clear adhesive sheet of the present invention is an optically clear adhesive sheet containing: a polyurethane, the polyurethane being a cured product of a polyurethane composition containing a polyol component and a polyisocyanate component, the polyisocyanate component including a hydrophilic polyisocyanate, the optically clear adhesive sheet having a moisture content of 400 ppm or lower as measured by a Karl Fischer method. The "optically clear adhesive sheet" as used herein has the same meaning as an "optically clear adhesive film". The moisture content as used herein means the weight ratio of moisture to the entire optically clear adhesive sheet.

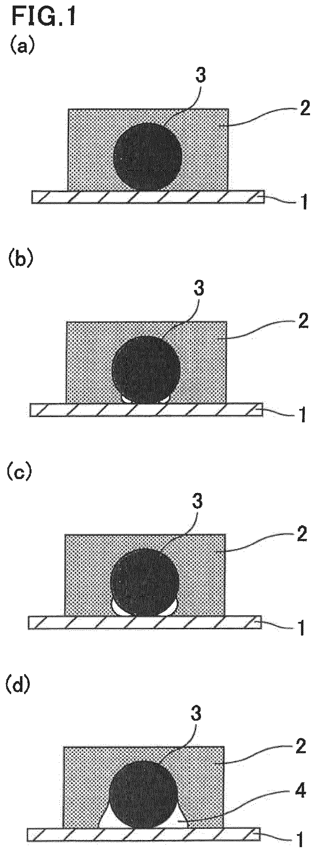

When the moisture content as measured by the Karl Fischer method is higher than 400 ppm, peeling occurs at sites such as the interface between the optically clear adhesive sheet and the touchscreen, presumably due to gasification of moisture absorbed. Also, a fine foreign matter may enter the interface between the optically clear adhesive sheet and the touchscreen. With such a foreign matter, as shown in Fig. 1, air bubbles 4 expand around a foreign matter 3 under an optically clear adhesive sheet 2 bonded to a glass plate 1, easily causing peeling. Fig. 1 shows schematic views showing how air bubbles are generated around a fine foreign matter having entered between an optically clear adhesive sheet and a touchscreen, chronologically from (a) to (d). In contrast, annealing the optically clear adhesive sheet for dehydration before bonding so as to bring the moisture content as measured by the Karl Fischer method to 400 ppm or lower enables prevention of peeling after the bonding even when the absorbed moisture before the annealing is in a saturated state. This can also prevent peeling even when a foreign matter enters the interface.

The optically clear adhesive sheet of the present invention contains a polyurethane, preferably a thermosetting polyurethane. The polyurethane is a cured product of a polyurethane composition containing a polyol component and a polyisocyanate component. The cured product of a polyurethane composition is obtained by reacting the polyol component and the polyisocyanate component and has a structure represented by the following formula (A).

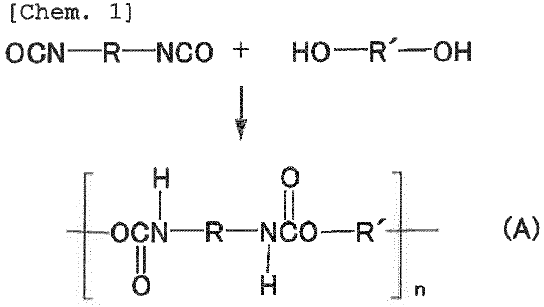

In the formula (A), R represents a non-NCO-group moiety of a polyisocyanate component, R' represents a non-OH-group moiety of a polyol component, and n represents the number of repeating units.

The cured product of a polyurethane composition is preferably not an acrylic-modified one, and preferably contains no moiety derived from, for example, an acrylic ester or a methacrylic ester in the main chain. An acrylic-modified cured product of a polyurethane composition is hydrophobic and is thus likely to cause moisture condensation at high temperature and high humidity. The moisture condensation may cause defects such as whitening and foaming to deteriorate the optical characteristics. A non-acrylic-modified cured product of a polyurethane composition can prevent deterioration of the optical characteristics due to defects such as whitening and foaming at high temperature and high humidity. The polyurethane preferably contains a total of 80 mol% or more of monomer units derived from a polyol component and monomer units derived from a polyisocyanate component relative to the whole monomer units constituting the polyurethane. More preferably, the polyurethane consists of monomer units derived from a polyol component and monomer units derived from a polyisocyanate component.

Both the polyol component and the polyisocyanate component can be components that are liquids at normal temperature (23°C), so that a cured product of a polyurethane composition can be obtained without a solvent. Other components such as a tackifier can be added to the polyol component or the polyisocyanate component, and are preferably added to the polyol component. Production of an optically clear adhesive sheet using a cured product of a polyurethane composition, which requires no removal of a solvent, enables formation of a thick sheet with an even surface. The optically clear adhesive sheet of the present invention, when used to bond a display panel and a transparent member (touchscreen) having on its outer surface a transparent conductive film, can therefore conform to an uneven surface on which the bezel is present. Also, the optically clear adhesive sheet of the present invention can keep its optical characteristics even when made thick, and thus can sufficiently prevent transparency decrease (haze increase), coloring, and foaming (generation of air bubbles at the interface with the adherend).

Containing a cured product of a polyurethane composition and flexible, the optically clear adhesive sheet of the present invention under tensile stress is elongated well and very unlikely to be torn. The optically clear adhesive sheet can therefore be peeled off without adhesive residue. Since the optically clear adhesive sheet of the present invention can be made thick while being flexible, the optically clear adhesive sheet is excellent in shock resistance and can be used to bond a transparent member having a transparent conductive film on its outer surface to a cover panel. In the case of using an additional member, the optically clear adhesive sheet can also be used to bond the display panel or the transparent member having a transparent conductive film on its outer surface to the additional member. The optically clear adhesive sheet of the present invention, containing a cured product of a polyurethane composition, has a high dielectric constant and can give a higher capacitance than conventional optically clear adhesive sheets formed of an acrylic resin composition. The optically clear adhesive sheet of the present invention is therefore suitable for bonding of a capacitive touchscreen.

### [Polyol component]

The polyol component preferably has an olefin skeleton, meaning that its main chain includes a polyolefin or a derivative thereof. Examples of the polyol component having an olefin skeleton include polybutadiene-based polyols such as 1,2-polybutadiene polyol, 1,4-polybutadiene polyol, 1,2-polychloroprene polyol, and 1,4-polychloroprene polyol, polyisoprene-based polyols, and saturated compounds obtained by adding hydrogen or halogen atoms to the double bonds of these polyols, for example. The polyol component may be a polyol obtained by copolymerizing a polybutadiene-based polyol, for example, with an olefin compound, such as styrene, ethylene, vinyl acetate, or acrylic ester, or a hydrogenated compound thereof. The polyol component may have a linear or branched structure. These compounds for the polyol component may be used alone or in combination with each other. The polyol component used for the polyurethane more preferably includes 80 mol% or more of a polyol component having an olefin skeleton, and still more preferably consists of a polyol component having an olefin skeleton.

The polyol component preferably has a number average molecular weight of 300 or more and 5000 or less. If the polyol component has a number average molecular weight of less than 300, the polyol component and the polyisocyanate component may react with each other very fast and the resulting cured product of a polyurethane composition may be difficult to mold into a sheet with an even surface or the cured product of a polyurethane composition may be less flexible and fragile. If the polyol component has a number average molecular weight of more than 5000, problems may arise such as that the polyol component may have a very high viscosity to make.it difficult to mold the cured product of a polyurethane composition into a sheet with an even surface or that the cured product of a polyurethane composition may crystallize to make the product opaque. The polyol component more preferably has a number average molecular weight of 500 or more and 3000 or less.

Known examples of the polyol component having an olefin skeleton include a polyolefin polyol obtained by hydrogenating a hydroxy group-terminated polyisoprene ("EPOL®" available from Idemitsu Kosan Co., Ltd., number average molecular weight: 2500), both-end hydroxy group-terminated hydrogenated polybutadiene ("GI-1000" available from Nippon Soda Co., Ltd., number average molecular weight: 1500), and polyhydroxy polyolefin oligomer ("POLYTAIL®" available from Mitsubishi Chemical Corporation).

### [Polyisocyanate component]

The polyisocyanate component includes a hydrophilic polyisocyanate. The term "hydrophilic" as used herein means that the solubility parameter (SP value) of the structure of the polyisocyanate excluding the isocyanate groups (i.e., R in the above formula (A)), calculated by the Fedors method, is 9.0 MPa^{1/2} or higher. Examples of the hydrophilic polyisocyanate include reaction products of a polyisocyanate and a hydrophilic polyol, with a reaction product of a modified aliphatic isocyanate and a hydrophilic polyol preferred. The hydrophilic polyisocyanate is preferably a polyisocyanate having a hydrophilicity-enhancing functional group (hydrophilic group) added, not a polyisocyanate whose hydrophilicity is enhanced only by a structure derived from an isocyanate group, such as an isocyanurate structure or a biuret structure.

The hydrophilic polyisocyanate preferably has an ethylene oxide unit in a molecule, and is more preferably a modified polyisocyanate obtained by reacting an acyclic aliphatic and/or alicyclic polyisocyanate containing an isocyanate group with an ether compound having an ethylene oxide unit. An acyclic aliphatic and/or alicyclic polyisocyanate can reduce the chances of coloring or discoloration of the optically clear adhesive sheet and enables the optically clear adhesive sheet to exhibit long-lasting transparency with higher reliability. Also, being modified with an ether compound having an ethylene oxide unit, the polyisocyanate component can reduce whitening owing to its hydrophilic moiety (ethylene oxide unit) and can exhibit miscibility with low-polarity components such as a tackifier and a plasticizer owing to its hydrophobic moiety (the other units). The polyisocyanate component having an ethylene oxide unit is likely to cause absorption of moisture in the air, meaning that it is especially important to control the moisture content as in the present invention.

The acyclic aliphatic and/or alicyclic polyisocyanate refers to .one or more of the following: aliphatic diisocyanates, alicyclic diisocyanates, and polyisocyanates synthesized from starting materials of acyclic aliphatic and/or alicyclic diisocyanates.

Specific examples of the acyclic aliphatic polyisocyanate include hexamethylene diisocyanate (HDI), tetramethylene diisocyanate, 2-methyl-pentane-1,5-diisocyanate, 3-methyl-pentane-1,5-diisocyanate, lysine diisocyanate, trioxyethylene diisocyanate, and modified products thereof. These may be used alone or in combination with each other. Specific examples of the alicyclic polyisocyanate include hexamethylene diisocyanate (HDI), tetramethylene diisocyanate, 2-methyl-pentane-1,5-diisocyanate, 3-methyl-pentane-1,5-diisocyanate, lysine diisocyanate, trioxyethylene diisocyanate, isophorone diisocyanate, cyclohexyl diisocyanate, 4,4'-dicyclohexylmethane diisocyanate, norbornane diisocyanate, hydrogenated tolylene diisocyanate, hydrogenated xylene diisocyanate, hydrogenated tetramethylxylene diisocyanate, and modified products thereof. These may be used alone or in combination with each other. Preferred are hexamethylene diisocyanate, isophorone diisocyanate, and modified products thereof, with hexamethylene diisocyanate and modified products thereof being particularly preferred. Examples of the modified products of hexamethylene diisocyanate include isocyanurate-modified, allophanate-modified, and/or urethane-modified products of hexamethylene diisocyanate.

Examples of the ether compound having an ethylene oxide unit include alcohol-, phenol-, or amine-ethylene oxide adducts. In order to improve the hydrophilicity, ether compounds having three or more ethylene oxide units per molecule are preferred.

Examples of the alcohol include monohydric alcohols, dihydric alcohols (e.g., ethylene glycol, diethylene glycol, propylene glycol, dipropylene glycol, 1,4-butanediol, 1,6-hexanediol, 1,3-butylenediol, neopentyl glycol), and trihydric alcohols (e.g., glycerol, trimethylol propane). These may be used alone or in combination with each other.

Examples of the phenol include hydroquinone, bisphenols (e.g., bisphenol A, bisphenol F), and phenolformaldehyde condensates with a low condensation degree (novolac resin and resol prepolymers). These may be used alone or in combination with each other.

The ethylene oxide unit content is preferably 1 wt% or more and 20 wt% or less of the whole polyurethane. If the ethylene oxide unit content is less than 1 wt%, whitening may not be sufficiently reduced. If the ethylene oxide unit content is more than 20 wt%, the ethylene oxide unit may have a low miscibility with low-polarity components such as a tackifier and a plasticizer, deteriorating optical characteristics such as haze.

The number of isocyanate groups per molecule of the modified polyisocyanate is preferably 2.0 or more on average. If the number of isocyanate groups is less than 2.0 on average, the polyurethane composition may not be sufficiently cured due to a decrease in the crosslinking density.

The polyurethane composition preferably has an α ratio (the number of moles of OH groups derived from polyol component/the number of moles of NCO groups derived from polyisocyanate component) of 1 or higher. An α ratio of lower than 1 suggests that the amount of the polyisocyanate component is excessive for the amount of the polyol component and thus the cured product of a polyurethane composition is rigid, which makes it difficult to achieve the flexibility required for the optically clear adhesive sheet. With a low flexibility, an optically clear adhesive sheet cannot conform to a rough, uneven bonding surface of the adherend, especially an optical member such as a touchscreen. Also, the adhesive strength required for the optically clear adhesive sheet may not be achieved. The α ratio more preferably satisfies the inequality 1 < α < 2.0. If the α ratio is 2.0 or higher, the polyurethane composition may not be sufficiently cured.

### [Tackifier]

The polyurethane composition in the present invention may further contain a tackifier (adhesion-imparting agent). A tackifier is an additive that is added to enhance the adhesive strength, and is typically an amorphous oligomer having a molecular weight of several hundreds to several thousands which is a thermoplastic resin in a liquid or solid state at normal temperature. A polyurethane composition containing a tackifier gives sufficient adhesive strength to each surface of an optically clear adhesive sheet containing a cured product of the polyurethane composition.

Non-limiting examples of the tackifier include petroleum resin-based tackifiers, hydrocarbon resin-based tackifiers, rosin-based tackifiers, and terpene-based tackifiers. These may be used alone or in combination with each other.

The tackifier is preferably a petroleum resin-based tackifier because it has excellent miscibility with a component such as the polyol component having an olefin skeleton. An especially preferred petroleum resin-based tackifier is a hydrogenated petroleum resin obtained by hydrogenating a copolymer of dicyclopentadiene and an aromatic compound. Dicyclopentadiene is obtainable from a C5 fraction. Examples of the aromatic compound include vinyl aromatic compounds such as styrene, α-methylstyrene, and vinyl toluene. The ratio of dicyclopentadiene to a vinyl aromatic compound is not particularly limited, but the ratio by weight of dicyclopentadiene to a vinyl aromatic compound (dicyclopentadiene:vinyl aromatic compound) is preferably 70:30 to 20:80, more preferably 60:40 to 40:60. The hydrogenated petroleum resin has a softening point of preferably 90°C to 160°C, a vinyl aromatic compound unit content of preferably 35 mass% or less, a bromine value of preferably 0 to 30 g/100 g, and a number average molecular weight of preferably 500 to 1100. Known examples of the hydrogenated petroleum resin include "I-MARV P-100" available from Idemitsu Kosan Co., Ltd.

The tackifier is also preferably a hydrocarbon resin-based tackifier because it has excellent miscibility with, for example, the polyol component having an olefin skeleton. An especially preferred hydrocarbon resin-based tackifier is an alicyclic saturated hydrocarbon resin. Known examples of the alicyclic saturated hydrocarbon resin include "ARKON P-100" available from Arakawa Chemical Industries, Ltd.

The tackifier preferably has an acid value of 1 mg KOH/g or less. The tackifier with an acid value of 1 mg KOH/g or less can be sufficiently prevented from inhibiting the reaction between the polyol component and the polyisocyanate component. The tackifier preferably has a softening point of 80°C or higher and 120°C or lower, more preferably 80°C or higher and 100°C or lower. With a softening point of 80°C or higher and 120°C or lower, thermal deterioration of the polyol component can be sufficiently avoided when the tackifier is dissolved in the polyol component.

The tackifier content is preferably 1 wt% or more and 20 wt% or less of the polyurethane composition. If the tackifier content is less than 1 wt%, the resulting optically clear adhesive sheet may fail to exhibit sufficient adhesive strength, especially at high temperature and high humidity. If the tackifier content is more than 20 wt%, the tackifier may inhibit the reaction between the polyol component and the polyisocyanate component to cause insufficient urethane crosslinking in the cured product of the polyurethane composition. The resulting optically clear adhesive sheet may be melted and deformed or cause the tackifier to deposit (bleed) at high temperature and high humidity. Also, if the reaction duration for the polyol component and the polyisocyanate component is lengthened to allow sufficient urethane crosslinking, the productivity decreases.

### [Plasticizer]

The polyurethane composition in the present invention may further contain a plasticizer. Addition of a plasticizer decreases the rigidity, thereby improving the handleability of the optically clear adhesive sheet of the present invention and the capability of the optically clear adhesive sheet to conform to uneven surfaces. The addition of a plasticizer may possibly reduce the adhesive strength, but the optically clear adhesive sheet of the present invention, even with such more or less reduced adhesive strength, can exhibit sufficient adhesive strength.

The plasticizer may be any compound used to impart flexibility to a thermoplastic resin, and preferably includes a carboxylic acid-based plasticizer in view of miscibility and weather resistance. Examples of the carboxylic acid-based plasticizer include phthalic esters (phthalic acid-based plasticizers) such as diundecyl phthalate, dioctyl phthalate, diisononyl phthalate, diisodecyl phthalate, and dibutyl phthalate; 1,2-cyclohexanedicarboxylic acid diisononyl ester; adipic acid esters; trimellitic acid esters; maleic acid esters; benzoic acid esters; and poly-α-olefin. These may be used alone or in combination with each other. Known examples of the carboxylic acid-based plasticizer include "DINCH" available from BASF, "SANSO CIZER DUP" available from New Japan Chemical Co., Ltd., and "Durasyn® 148" available from Ineous Oligomers.

### [Catalyst]

The polyurethane composition in the present invention may further contain a catalyst. The catalyst may be any catalyst used in a urethane modification reaction. Examples thereof include organotin compounds such as di-n-butyltin dilaurate, dimethyltin dilaurate, dibutyltin oxide, and tin octanoate; organotitanium compounds; organozirconium compounds; tin carboxylates; bismuth carboxylates; and amine-based catalysts such as triethylene diamine.

The catalyst is preferably a non-amine-based catalyst. In the case of using an amine-based catalyst, the optically clear adhesive sheet may be easily discolored. More preferred as the catalyst is dimethyltin dilaurate.

The amount of the catalyst added is, for example, 0.001 wt% or more and 0.1 wt% or less of the total amount of the polyol component and the polyisocyanate component.

### [Monoisocyanate component]

The polyurethane composition may further contain a monoisocyanate component. The polyurethane composition containing a monoisocyanate component can enhance the adhesive strength at high temperature and high humidity without spoiling the flexibility required for the optically clear adhesive sheet. In the case where the polyurethane composition has an α ratio of 1 or higher, a monoisocyanate component is preferably used to prevent unreacted OH groups from remaining in the cured product.

The monoisocyanate component is a compound containing one isocyanate group in a molecule. Specific examples thereof include octadecyl diisocyanate (ODI), 2-methacryloyloxyethyl isocyanate (MOI), 2-acryloyloxyethyl isocyanate (AOI), octyl isocyanate, heptyl isocyanate, ethyl 3-isocyanatopropionate, cyclopentyl isocyanate, cyclohexyl isocyanate, 1-isocyanato-2-methoxyethane, ethyl isocyanatoacetate, butyl isocyanatoacetate, and p-toluenesulfonyl isocyanate. These may be used alone or in combination with each other. The monoisocyanate component is preferably 2-methacryloyloxyethyl isocyanate (MOI). This is because MOI has a high miscibility with the polyol component and has high hydrophobicity.

However, the polyurethane composition containing a monoisocyanate component may exhibit deteriorated characteristics because the monoisocyanate component may inhibit the original urethane skeleton. Also, the monisocyanate component, when contained excessively, may react with moisture in the air, causing foaming. Thus, in production of the optically clear adhesive sheet of the present invention, the polyurethane composition preferably contains no monoisocyanate component in consideration of the robustness of the design.

The polyurethane composition may contain, as necessary, various additives such as colorants, stabilizers, antioxidants, antifungal agents, and flame retardants as long as the characteristics required for the optically clear adhesive sheet are not deteriorated.

The optically clear adhesive sheet of the present invention may have any thickness, but preferably has a thickness of 50 µm or greater and 2000 µm or smaller. If the optically clear adhesive sheet has a thickness of less than 50 µm, the sheet, when one of its surfaces is bonded to the surface of an optical member, may not be able to conform to a rough, uneven surface of the optical member. As a result, the other surface of the optically clear adhesive sheet may fail to be bonded to another optical member with a sufficient adhesive strength. The optically clear adhesive sheet having a thickness of greater than 2000 µm may be insufficient in optical characteristics such as haze and total light transmittance. The lower limit of the thickness of the optically clear adhesive sheet is more preferably 100 µm, still more preferably 200 µm, particularly preferably 250 µm. The upper limit of the thickness of the optically clear adhesive sheet is more preferably 1500 µm, still more preferably 1000 µm. The optically clear adhesive sheet preferably has a thickness that is triple or more the height of the highest peak of a rough, uneven bonding surface of the adherend.

The optically clear adhesive sheet of the present invention preferably has a haze of 1% or lower and a total light transmittance of 90% or higher in order to have the optically clear adhesive sheet characteristics. The haze and the total light transmittance can each be measured with, for example, a turbidity meter "Haze Meter NDH2000" available from Nippon Denshoku Industries Co., Ltd. The haze is measured by a process in accordance with JIS K 7136, and the total light transmittance is measured by a process in accordance with JIS K 7361-1.

The optically clear adhesive sheet of the present invention preferably has an adhesive strength of 0.1 N/25 mm or more and 15 N/25 mm or less, particularly preferably 1 to 10 N/25 mm, at normal temperature and normal humidity as measured by a 180° peel test. The adhesive strength is preferably 1.0 N/25 mm or more, more preferably 4 N/25 mm or more and 15 N/25 mm or less, still more preferably 10 N/25 mm or more and 15 N/25 mm or less, at high temperature and high humidity. The optically clear adhesive sheet having an adhesive strength of 15 N/25 mm or less, when used to bond an optical member such as a touchscreen to another optical member, can be peeled off without adhesive residue, exhibiting excellent reworkability. If the adhesive strength of the optically clear adhesive sheet is very high, it may be difficult to remove air bubbles present between the optically clear adhesive sheet and the adherend.

The optically clear adhesive sheet of the present invention preferably has a micro rubber hardness (type A) of 0.1° or higher and 25° or lower. The optically clear adhesive sheet having a micro rubber hardness (type A) of lower than 0.1° may exhibit low handleability in use (during bonding to an optical member) and may be deformed. In contrast, the optically clear adhesive sheet having a micro rubber hardness (type A) of higher than 25° may exhibit low flexibility and, during bonding to an optical member, may fail to conform to the surface shape of the optical member and include air between itself and the optical member. This may eventually cause peeling of the sheet from the optical member. Also, the optically clear adhesive sheet having low flexibility may fail to conform to an uneven surface on which the bezel is present, during bonding of an optical member such as a touchscreen to another optical member. The micro rubber hardness (type A) of the optically clear adhesive sheet is more preferably 0.5° or higher and 15° or lower. The micro rubber hardness (type A) can be measured with, for example, a micro durometer "MD-1 Type A" available from Kobunshi Keiki Co., Ltd. The micro durometer "MD-1 Type A" is a durometer designed and produced as an approximately 1/5-sized compact model of a spring type A durometer, and is capable of giving the same measurement result as a spring type A durometer even when the measuring object is thin.

The optically clear adhesive sheet of the present invention may have a release liner on each surface. A laminate including the optically clear adhesive sheet of the present invention, a first release liner covering one surface of the optically clear adhesive sheet, and a second release liner covering the other surface of the optically clear adhesive sheet (hereinafter, such a laminate is referred to as "the laminate of the present invention") is also one aspect of the present invention. The first and second release liners can protect the surfaces of the optically clear adhesive sheet of the present invention until immediately before the sheet is bonded to an adherend. The release liners can therefore prevent deterioration of adhesion and sticking of foreign matters. Also, the surfaces can be prevented from being bonded to something other than the adherend, so that the handleability of the optically clear adhesive sheet of the present invention can be improved.

The first and second release liners can each be, for example, a polyethylene terephthalate (PET) film. The materials of the first release liner and the second release liner may be the same as or different from each other, and the thicknesses thereof may also be the same as or different from each other.

The bonding strength (peel strength) between the optically clear adhesive sheet of the present invention and the first release liner and the bonding strength between the optically clear adhesive sheet of the present invention and the second release liner are preferably different from each other. Such a difference in bonding strength makes it easy to peel one of the first and second release liners (release liner with lower bonding strength) alone from the laminate of the present invention and bond the exposed first surface of the optically clear adhesive sheet and the first adherend to each other, followed by peeling the other of the first and second release liners (release liner with higher bonding strength) and then bonding the exposed second surface of the optically clear adhesive sheet and the second adherend to each other. Easy-peel treatment (release treatment) may be performed on one or both of the surface of the first release liner coming into contact with the optically clear adhesive sheet of the present invention and the surface of the second release liner coming into contact with the optically clear adhesive sheet of the present invention. Examples of the easy-peel treatment include siliconizing.

Application of the optically clear adhesive sheet of the present invention may be, but is not particularly limited to, bonding of members such as a display panel, a touchscreen, and a cover panel to each other, for example. A display device with a touchscreen including the optically clear adhesive sheet of the present invention, a display panel, and a touchscreen (hereinafter, such a display device is also referred to as "the display device with a touchscreen according to the present invention") is also one aspect of the present invention.

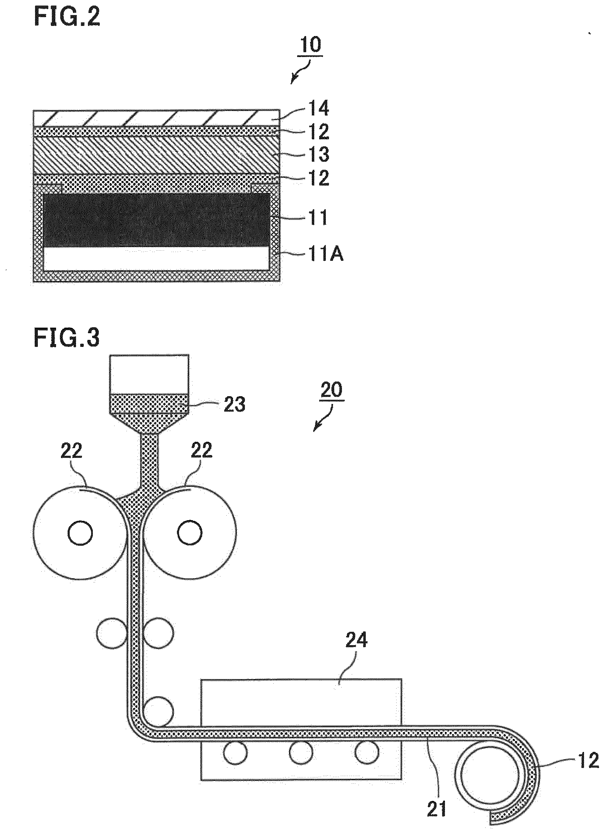

Fig. 2 shows a schematic cross-sectional view of an exemplary display device with a touchscreen which includes the optically clear adhesive sheets of the present invention. A display device 10 shown in Fig. 2 includes a display panel 11, an optically clear adhesive sheet 12, a touchscreen (glass substrate with an ITO transparent conductive film) 13, another optically clear adhesive sheet 12, and a transparent cover panel 14 stacked in the given order. The three optical members, namely the display panel 11, the touchscreen 13, and the transparent cover panel 14, are integrated into one member with the two optically clear adhesive sheets 12 of the present invention. The display panel 11 can be of any type, such as a liquid crystal panel or an organic electroluminescent panel (organic EL panel). The touchscreen 13 can be, for example, a resistive touchscreen or a capacitive touchscreen.

The display panel 11 is housed in a bezel (housing for the display panel 11) 11A that is provided with an opening in its surface close to the display surface. The outer edge of the opening of the bezel 11A has produced the uneven surface with peaks corresponding to the thickness of the bezel 11A. The optically clear adhesive sheet 12 bonded covers the display surface sides of the display panel 11 and the bezel 11A to conform to the uneven surface with peaks corresponding to the thickness of the bezel 11A. In order to conform to the uneven surface with peaks corresponding to the thickness of the bezel 11A, the optically clear adhesive sheet 12 is required to have flexibility allowing the sheet to conform to the uneven surface and to be thicker than the bezel 11A. Thus, for example in the case where the peaks of the uneven surface formed by the bezel 11A have a height of 200 µm, the optically clear adhesive sheet 12 used to bond an optical member to the display panel 11 housed in the bezel 11A preferably has a thickness of 600 µm or larger. The optically clear adhesive sheet 12 of the present invention exhibits sufficient optical characteristics and flexibility even in the case of having a thickness of 600 µm or larger, and is therefore suited to bonding of an optical member to the display panel 11 housed in the bezel 11A.

The optically clear adhesive sheet of the present invention employed in such a display device is less likely to decrease in the adhesive strength under various conditions, and enables lasting, tight bonding of the optical members. As a result, no gap is formed between the optical members and the optically clear adhesive sheet, so that a decrease of visibility due to factors such as an increase in the interfacial reflection can be prevented. In particular, the optically clear adhesive sheet of the present invention is suitable for a display device incorporated into an automotive navigation system which needs to have high reliability, for example.

The optically clear adhesive sheet of the present invention may be produced by any method such as a method in which a polyurethane composition is prepared, and then the composition is molded while being heat-cured by a known method. The method preferably includes preparing a polyurethane composition by mixing a polyol component and a polyisocyanate component with stirring, and curing the polyurethane composition.

The following is a specific example of the production method. First, a masterbatch is prepared by adding a given amount of a tackifier to a polyol component and dissolving the tackifier by stirring while heating. The obtained masterbatch, an additional polyol component, and a polyisocyanate component as well as other components such as a catalyst as necessary are mixed with stirring using a mixer, for example, so that a liquid or gel polyurethane composition is obtained. The polyurethane composition is immediately fed into a molding machine such that the polyurethane composition is crosslinked and cured while being transported in the state of being sandwiched between the first and second release liners. Thereby, the polyurethane composition is semi-cured into a sheet integrated with the first and second release liners. The sheet is then crosslinked in a furnace for a given period of time, whereby an optically clear adhesive sheet containing a cured product of a polyurethane composition is obtained. Through these steps, the laminate of the present invention is formed.

Fig. 3 shows a schematic view for describing an exemplary molding machine used in production of the optically clear adhesive sheet of the present invention. In a molding machine 20 shown in Fig. 3, a liquid or gel uncured polyurethane composition 23 is poured between paired release liners (PET films) 21 continuously fed by paired rollers 22 which are disposed with a space in between. With the polyurethane composition 23 retained between the release liners 21, the composition is transported into a heating machine 24 while being cured (crosslinked). In the heating machine 24, the polyurethane composition 23 is heat-cured while being retained between the release liners (PET films) 21, whereby molding of the optically clear adhesive sheet 12 containing a cured product of a polyurethane composition is completed.

The method for producing the optically clear adhesive sheet of the present invention may include, after preparation of an uncured polyurethane composition, film formation using a general film-forming machine (e.g., any of various coating machines, bar coater, doctor blade) or by a general film-forming treatment. The optically clear adhesive sheet of the present invention may alternatively be produced by centrifugal molding.

The method for bonding an optically clear adhesive sheet according to the present invention which bonds the optically clear adhesive sheet of the present invention to a substrate is also one aspect of the present invention. Annealing the optically clear adhesive sheet for dehydration before bonding so as to bring the moisture content as measured by the Karl Fischer method to 400 ppm or lower enables prevention of peeling after the bonding even when the absorbed moisture reached saturation in long-term storage. This can also prevent peeling even when a foreign matter enters the interface.

### EXAMPLES

The present invention is described in more detail below based on examples. The examples, however, are not intended to limit the scope of the present invention.

### (Materials)

Materials used to prepare a polyurethane composition in the following examples and comparative examples are listed below.
(A) Polyol component
   - Polyolefin polyol ("EPOL®" available from Idemitsu Kosan Co., Ltd., number average molecular weight: 2500)
(B) Polyisocyanate component
   - Hexamethylene diisocyanate (HDI)-based polyisocyanate ("Coronate 4022" available from Tosoh Corporation)
(C) Tackifier
   - Hydrogenated petroleum resin-based tackifier ("I-MARV P-100" available from Idemitsu Kosan Co., Ltd.)
(D) Catalyst
   Dimethyltin dilaurate ("Fomrez catalyst UL-28" available from Momentive)

The HDI-based polyisocyanate ("Coronate 4022" available from Tosoh Corporation) is obtained by reacting a polyisocyanate synthesized from starting materials of HDI and/or HDI monomers with an ether polyol having three or more ethylene oxide units on average per molecule thereof.

### (Example 1)

First, a solid hydrogenated petroleum resin-based tackifier (I-MARV P-100) was added to a polyolefin polyol (EPOL) whose temperature was controlled to 100°C to 150°C, and the mixture was stirred so that a masterbatch containing the tackifier dissolved in the polyolefin polyol was obtained. Here, the tackifier content in the masterbatch was adjusted to 30 wt%. A polyolefin polyol (EPOL, 100 parts by weight), the HDI-based polyisocyanate (36.5 parts by weight), the tackifier masterbatch (186.9 parts by weight), and the catalyst (dimethyltin dilaurate, 0.02 parts by weight) were mixed with stirring using an oscillating model agitator "Ajiter". Thereby, a polyurethane composition having an α ratio of 1.7 was prepared.

The obtained polyurethane composition was fed into the molding machine 20 shown in Fig. 3. The polyurethane composition was crosslinked and cured at a furnace temperature of 50°C to 90°C for a furnace time of a few minutes while being transported in the state of being sandwiched between the paired release liners (PET films with release-treated surfaces) 21, and thereby a sheet with the release liners 21 was obtained. The sheet was crosslinked in the heating machine 24 for 10 to 15 hours, so that the optically clear adhesive sheet 12 having the release liner 21 on each surface and containing a cured product of a polyurethane composition (hereinafter, such a sheet is also referred to as an "optically clear adhesive sheet with release liners") was produced.

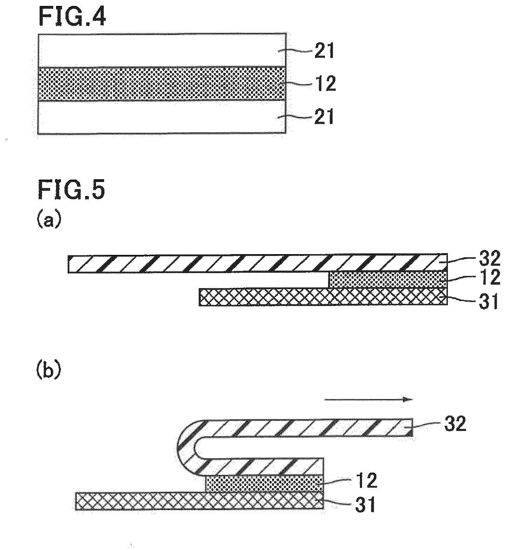

Fig. 4 shows a schematic cross-sectional view of an optically clear adhesive sheet with release liners of Example 1. As shown in Fig. 4, the obtained optically clear adhesive sheet with release liners was a laminate of the release liner 21, the optically clear adhesive sheet 12 containing a cured product of a polyurethane composition, and the release liner 21. The optically clear adhesive sheet 12 had a thickness of 1500 µm.

### (Evaluation on optically clear adhesive sheet)

### (1) Delay bubble test

Immediately after production of the optically clear adhesive sheets with release liners of Example 1, each optically clear adhesive sheet was bonded to glass plates through the following processes (i) to (v). The workpiece was then left in a clean room at normal temperature and normal humidity.
(i) One of the release liners, which has lower bonding strength, was peeled from the optically clear adhesive sheet with release liners.
(ii) A glass plate was bonded in a vacuum to the surface of the sheet from which the release liner was peeled, using a vacuum bonding device.
(iii) The other release liner, which has higher bonding strength, was peeled from the optically clear adhesive sheet with release liners.
(iv) Spherical glass beads (Φ = 200 µm) were manually scattered on the surface of the sheet from which the release liner was peeled.
(v) A glass plate was bonded in a vacuum to the surface of the sheet on which the glass beads were scattered, using the vacuum bonding device.

Thereafter, four test samples were taken out after each duration of standing, i.e., after 4 hours, 24 hours, 48 hours, 72 hours, 96 hours, 168 hours, and 192 hours, so that generation of delay bubbles (air bubbles after standing) at the interface between each optically clear adhesive sheet and the glass plates. The moisture content of each test sample taken out (optically clear adhesive sheet alone) was measured with a Karl Fischer moisture titrator (available from Kyoto Electronics Manufacturing Co., Ltd.). The Karl Fischer moisture titrator includes a main control unit (model: MCU-710M/S) and an evaporator (model: ADP-611). The moisture content was determined by placing the sample in the evaporator, heating the sample to 300°C to evaporate the moisture in the sample, and measuring the amount of evaporated moisture.

The following shows the determination results. The determination results are each the average of measured moisture contents excluding the maximum and minimum moisture contents, out of the moisture contents of the four test samples.
4-Hour standing: 120 ppm
24-Hour standing: 379 ppm
48-Hour standing: 374 ppm
72-Hour standing: 567 ppm
96-Hour standing: 803 ppm
168-Hour standing: 588 ppm
192-Hour standing: 671 ppm

As described above, the test samples left to stand for 48 hours or less in the clean room had an average moisture content of 400 ppm or lower as measured by the Karl Fischer method and contained no delay bubbles. The test samples left to stand for 72 hours in the clean room had an average moisture content of 567 ppm as measured by the Karl Fischer method and contained some delay bubbles. The test samples left to stand for more than 96 hours in the clean room had an average moisture content of higher than 800 ppm as measured by the Karl Fischer method and contained delay bubbles.

### (2) Post-peeling test

### A. Moisture absorbing treatment

After production of the optically clear adhesive sheet with release liners of Example 1, the optically clear adhesive sheet was placed in a 85°C, 85% high-temperature, high-humidity environment for three hours, so that the moisture content reached saturation (2000 to 3000 ppm).

### B. Pre-annealing

The optically clear adhesive sheets with release liners after the moisture absorbing treatment were dried (annealed) at 85°C for dehydration. The test samples with an annealing duration of 10 minutes, 30 minutes, and 1 hour were produced. The test sample with an annealing duration of 10 minutes had a moisture content of 900 ppm as measured by the Karl Fischer method. The test sample with an annealing duration of 30 minutes had a moisture content of 550 ppm as measured by the Karl Fischer method. The test sample with an annealing duration of 1 hour had a moisture content of 400 ppm as measured by the Karl Fischer method.

### C. Bonding

The test samples (optically clear adhesive sheets) with no annealing, an annealing duration of 10 minutes, an annealing duration of 30 minutes, and an annealing duration of 1 hour were each bonded to glass plates through the following processes (i) to (v).
(i) One of the release liners, which has lower bonding strength, was peeled from the optically clear adhesive sheet with release liners.
(ii) A glass plate was bonded in a vacuum to the surface of the sheet from which the release liner was peeled, using a vacuum bonding device.
(iii) The other release liner, which has higher bonding strength, was peeled from the optically clear adhesive sheet with release liners.
(iv) Spherical glass beads (Φ = 200 µm) were manually scattered on the surface of the sheet from which the release liner was peeled.
(v) A glass plate was bonded in a vacuum to the surface of the sheet on which the glass beads were scattered, using the vacuum bonding device.

### D. Accelerated test

Each test sample bonded to glass plates was placed in a 95°C dry oven. After the placement, occurrence of peeling (post-peeling) was determined.

The post-peeling test conducted through the above processes showed the following results. The test sample with no annealing caused significant post-peeling after being placed in the oven. The test samples with an annealing duration of 10 minutes and an annealing duration of 30 minutes caused slight post-peeling after being placed in the oven. The slight post-peeling was eliminated by pressurizing the test samples in an autoclave. The test sample with an annealing duration of 1 hour caused no post-peeling after being placed in the oven.

### (3) Micro rubber hardness (type A)

An optically clear adhesive sheet with release liners was cut into a test sample having a size of 75 mm (length) × 25 mm (width). The hardness of the test sample at normal temperature was measured with a micro durometer "MD-1 Type A" available from Kobunshi Keiki Co., Ltd. In this measurement, a cylindrical indenter having a diameter of 0.16 mm and a height of 0.5 mm was used. Here, one test sample was prepared and subjected to the measurement four times. The median of the obtained four measured values was 9.2°.

### (4) Adhesive strength

The adhesive strength (N/25 mm) was measured by a 180° peel test conducted by the following method. Fig. 5 shows schematic views for describing the method for evaluating the adhesive strength of the optically clear adhesive sheets. First, the optically clear adhesive sheet with release liners produced in Example 1 was cut into a test sample having a size of 75 mm (length) × 25 mm (width). One of the release liners of the test sample was peeled off, and the exposed optically clear adhesive sheet 12 of the test sample was bonded to a microscope slide 31 made of glass (i.e., glass slide) having a size of 75 mm (length) × 25 mm (width). The members were retained in this state under a pressure of 0.4 MPa for 30 minutes, so that the optically clear adhesive sheet 12 and the microscope slide 31 were bonded to each other. The other release liner on the side opposite to the microscope slide 31 was then peeled off, and a PET sheet ("Melinex® S" available from Teijin DuPont Films) 32 having a thickness of 125 µm was bonded to the surface of the optically clear adhesive sheet 12 opposite to the microscope slide 31 as shown in Fig. 5(a).

The test sample was then left to stand in a normal-temperature, normal-humidity environment (temperature: 23°C, humidity: 50%) for 12 hours. The adhesive strength of the optically clear adhesive sheet 12 to the microscope slide 31 was measured by pulling the PET sheet 32 in the 180° direction as shown in Fig. 5(b) such that the optically clear adhesive sheet 12 was separated from the microscope slide 31 at the interface therebetween. In each of the examples and comparative examples, two test samples were prepared for the measurement. The average of the obtained two measured values was 8.5 (N/25 mm).

### (5) Optical characteristics

One of the release liners of the optically clear adhesive sheet with release liners was peeled off, and the exposed optically clear adhesive sheet was bonded to a microscope slide. The members were retained in this state under a pressure of 0.4 Mpa for 30 minutes, so that the optically clear adhesive sheet and the microscope slide were bonded to each other. The other release liner on the side opposite to the microscope slide was peeled off. The optically clear adhesive sheet was then subjected to the following measurements.

### (5-1) Haze

The haze of the test sample was measured by a method in conformity with JIS K 7136 using a turbidity meter "Haze Meter NDH2000" available from Nippon Denshoku Industries Co., Ltd. Here, three test samples were prepared and subjected to the measurement in a normal-temperature, normal-humidity environment. The average of the obtained three measured values was 0.31%.

### (5-2) Total light transmittance

The total light transmittance of the test sample was measured by a method in conformity with JIS K 7361-1 using a turbidity meter "Haze Meter NDH2000" available from Nippon Denshoku Industries Co., Ltd. Here, three test samples were prepared and subjected to the measurement in a normal-temperature, normal-humidity environment. The average of the obtained three measured values was 91.5%.

### (6) Yellowness index after UV exposure

The release liner on each surface of the optically clear adhesive sheet with release liners was peeled off, and a test sample with the optically clear adhesive sheet sandwiched between glass slides was prepared. This test sample was exposed to an environment with an irradiation wavelength of 300 to 400 nm, irradiance of 68 W/m², and a temperature fixed at 60°C (without rain) for 72 hours using a super xenon weather meter. Then, the yellowness index was evaluated based on the ΔYI value obtained using a color meter ("Colour Cute i" available from Suga Test Instruments Co., Ltd.) as an evaluation index. The target value of the yellowness index after UV exposure was 1.0 or lower because optically clear adhesive sheets are desired to keep their transparency even after being exposed to UV light for a long period of time (e.g., for 10 years) in automotive applications, for example. The measured yellowness index was 0.37.

### (7) Durability

One of the release liners of each optically clear adhesive sheet with release liners was peeled off, and the exposed optically clear adhesive sheet was bonded to a microscope slide (made of soda-lime glass). The members were retained in this state under a pressure of 0.4 MPa for 30 minutes, so that the optically clear adhesive sheet and the microscope slide were bonded to each other. The other release liner on the side opposite to the microscope slide was then peeled off. The resulting test samples were left to stand, one in a high-temperature, normal-humidity environment (95°C) and the other in a high-temperature, high-humidity environment (85°C, 85%), each for 168 hours. Thereafter, the optically clear adhesive sheets were visually observed. Here, in the high-temperature, normal-humidity environment, the temperature was set to 95°C using a convection oven, but the humidity was not controlled.

The observation found no appearance changes in both the high-temperature, normal-humidity environment and the high-temperature, high-humidity environment.

The above results show that the optically clear adhesive sheets of Example 1 were excellent in all of the micro rubber hardness (type A), the adhesive strength, the optical characteristics (transparency), the yellowness index after UV exposure, and the durability.

### REFERENCE SIGNS LIST

- 1: Glass plate
- 2: Optically clear adhesive sheet
- 3: Foreign matter
- 4: Air bubble
- 10: Display device
- 11: Display panel
- 11A: Bezel
- 12: Optically clear adhesive sheet
- 13: Touchscreen
- 14: Transparent cover panel
- 20: Molding machine
- 21: Release liner
- 22: Roller
- 23: Polyurethane composition
- 24: Heating machine
- 31: Microscope slide
- 32: PET sheet

## Claims

1. An optically clear adhesive sheet comprising a polyurethane,
the polyurethane being a cured product of a polyurethane composition containing a polyol component and a polyisocyanate component,
the polyisocyanate component including a hydrophilic polyisocyanate,
the optically clear adhesive sheet having a moisture content of 400 ppm or lower as measured by a Karl Fischer method.

2. The optically clear adhesive sheet according to claim 1,
wherein the hydrophilic polyisocyanate has an ethylene oxide unit in a molecule.

3. The optically clear adhesive sheet according to claim 1 or 2,
wherein the polyol component has an olefin skeleton, and
the polyisocyanate component is a modified polyisocyanate obtainable by reacting an acyclic aliphatic and/or alicyclic polyisocyanate containing an isocyanate group with an ether compound having the ethylene oxide unit.

4. The optically clear adhesive sheet according to any one of claims 1 to 3,
wherein the polyurethane is a thermosetting polyurethane.

5. A method for producing the optically clear adhesive sheet according to any one of claims 1 to 4, the method comprising:
preparing the polyurethane composition by mixing the polyol component and the polyisocyanate component with stirring; and
curing the polyurethane composition.

6. A laminate comprising:
the optically clear adhesive sheet according to any one of claims 1 to 4;
a first release liner covering one surface of the optically clear adhesive sheet; and
a second release liner covering the other surface of the optically clear adhesive sheet.

7. A display device with a touchscreen, comprising:
the optically clear adhesive sheet according to any one of claims 1 to 4;
a display panel; and
a touchscreen.

8. A method for bonding an optically clear adhesive sheet, comprising
bonding the optically clear adhesive sheet according to any one of claims 1 to 4 to a substrate.
